# EUROPEAN PATENT SPECIFICATION

(11) **EP 2 839 138 B1**
(45) Date of publication and mention of the grant of the patent: **03.04.2019**
(21) Application number: 13718872.8
(22) Date of filing: 12.04.2013
(51) Int. Cl.: F02F 7/00, F02B 75/06

(54) **BALANCING ARRANGEMENT AND PISTON ENGINE**
AUSWUCHTVORRICHTUNG UND KOLBENMOTOR
DISPOSITIF D'ÉQUILIBRAGE ET MOTEUR À PISTON

(30) Priority: 20.04.2012 FI 20125429
(43) Date of publication of application: 25.02.2015
(73) Proprietor: Wärtsilä Finland Oy, 65100 Vaasa (FI)
(72) Inventor: GAMBINI, Leonardo, I-34018 Trieste (IT); GHETTI, Stefano, I-34018 Trieste (IT)
(74) Representative: Berggren Oy, Helsinki & Oulu
(86) International application number: PCT/FI2013/050405
(87) International publication number: WO 2013/156675

(56) References cited:
- DE-A1- 2 629 529
- DE-A1- 19 936 825
- DE-A1-102008 020 741
- JP-A- H0 571 586
- JP-U- S56 138 247
- KR-A- 20110 137 981
- KR-A- 20110 137 981
- US-A1- 2006 254 548

## Description

### Technical field of the invention

The present invention relates to a balancing arrangement for a piston engine in accordance with the preamble of claim 1.

### Background of the invention

Because of the cycle process and the construction of piston engines, the operation of an engine causes periodic forces, which can be divided into inertia forces and gas forces. The gas forces are caused by the combustion and the inertia forces by the rotating and reciprocating movements of the parts of the engine. Unbalanced forces cause vibrations, and therefore most piston engines are provided with different balancing arrangements. The need for balancing arrangements depends mainly on the cylinder configuration of the engine. Some of the forces can be balanced by simple counterweights that are attached to the crankshaft, but some forces and torques need to be balanced by separate balancing shafts or masses that are driven by the crankshaft. A problem is that the balancing arrangements always increase the complexity of the system, and the need to balance the forces and torques depends on the application. For instance, in case of a power plant engine, a higher amount of vibrations can be tolerated, if the costs and the complexity of the system can be reduced. On the other hand, in a cruise ship the comfort of the passengers is very important, and much higher requirements are set for the balancing of the forces. There is thus a need for a simple balancing arrangement that can be adapted to existing engines for providing extra comfort.

DE2629529 discloses a balancing arrangement for an engine.

DE102008020741 discloses a modular arrangement for an engine.

US2006/0254548 discloses a belt drive kit for an engine.

### Summary of the invention

The object of the present invention is to provide an improved balancing arrangement for a piston engine. The characterizing features of the arrangement according to the present invention are given in the characterizing part of claim 1.

A balancing arrangement according to the present invention comprises a rotatable balancing mass, a driving pulley, which can be arranged in force transmission connection with a crankshaft of the engine, a toothed belt for transmitting the rotational movement of the driving pulley to the balancing mass, and a belt tensioning device. The balancing mass is provided with a toothed circumference that can be engaged with the toothed belt and with a self-supporting frame, to which the balancing mass and the shaft of the driving pulley can be attached.

A piston engine according to the invention comprises a drive gear that is attached to the free end of a crankshaft of the engine, a gearwheel that is arranged at a first end of a shaft and driven by the drive gear, and a balancing arrangement defined above, of which driving pulley is arranged at the second end of the shaft.

The balancing arrangement according to the invention is simple and lightweight and can be assembled even to many existing engines with only minor modifications. The need for service of the balancing arrangement is minimal. Since a belt is used for driving the balancing mass, alternating forces and torques generated by the unbalanced mass are not transmitted directly to the driving gears as would be the case with gear transmission. The forces and torques are dampened by the belt, and the wear of the driving gears is thus reduced. Parts of the balancing arrangement can be easily accessed for servicing. Since the balancing mass is driven directly by the toothed belt, the arrangement is very compact. The self-supporting frame enables a modular structure of the balancing arrangement, and makes it easy to install to existing engines.

The balancing arrangement can be provided with means for monitoring the rotation speed of the balancing mass and/or the temperature of the bearings of the balancing mass to ensure that the arrangement is working properly.

Other beneficial embodiments of the invention are disclosed in the dependent claims.

### Brief description of the drawings

Fig. 1 shows a balancing arrangement according to the invention in connection with a crankshaft of an engine.
Fig. 2 shows an enlarged view of the balancing arrangement of Fig. 1.
Fig. 3 shows an exploded view of the balancing arrangement.
Fig. 4 shows a cross-sectional view of the arrangement.

### Detailed description of the invention

Embodiments of the invention are now described in more detail with reference to the accompanying drawings.

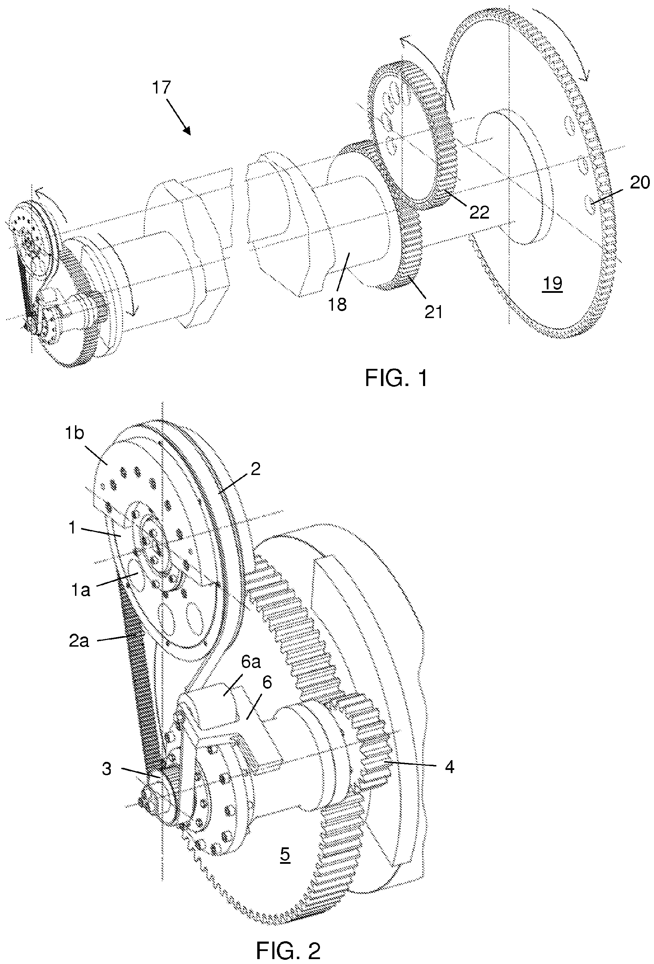

The engine, in which the invention is used, is a medium speed large internal combustion engine, such as a main or an auxiliary engine of a ship or an engine that is used at a power plant for producing electricity. The invention is suitable especially for engines that are used in applications where very effective vibration dampening is required. The balancing system of the engine can comprise several different balancing arrangements. For instance, the flywheel can be asymmetric and the crankshaft damper can be provided with an additional weight. The balancing system can also be provided with unbalanced masses that rotate to the opposite direction compared to the crankshaft. A balancing arrangement according to the invention can thus be used for providing additional balancing in applications where the standard balancing system of the engine is not adequate. One particular application is the engines of cruise ships, since the required level of comfort is very high. Figure 1 shows an example of a balancing system of a piston engine 17. A flywheel 19 at the end of a crankshaft 18 is provided with holes 20, which make the flywheel 19 asymmetric. The crankshaft 18 is also provided with a gearwheel 21, which drives a balancing gearwheel 22 that rotates to the opposite direction. A balancing arrangement according to the invention is located at the free end of the engine 17.

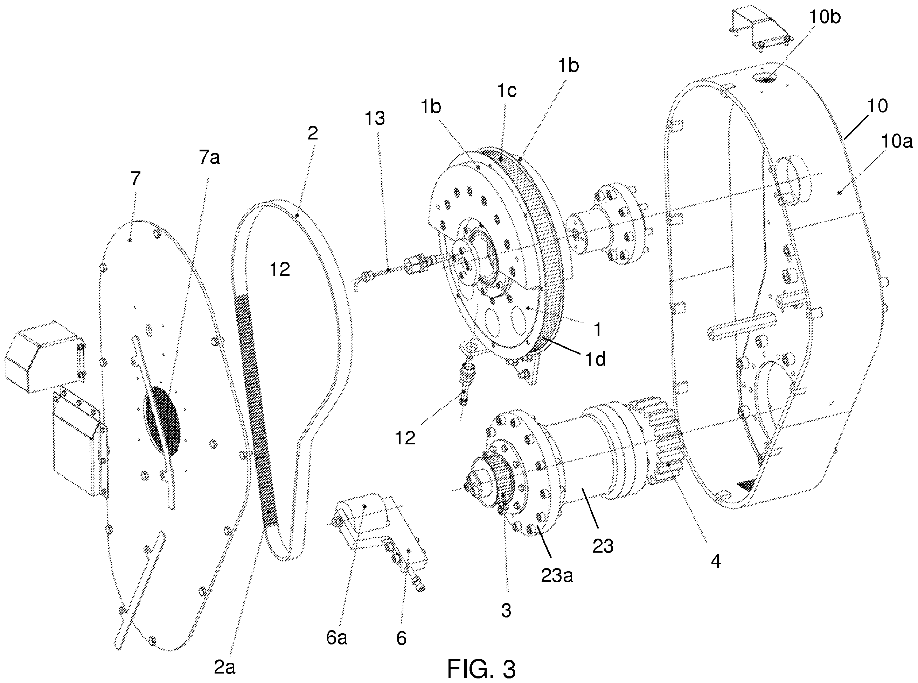

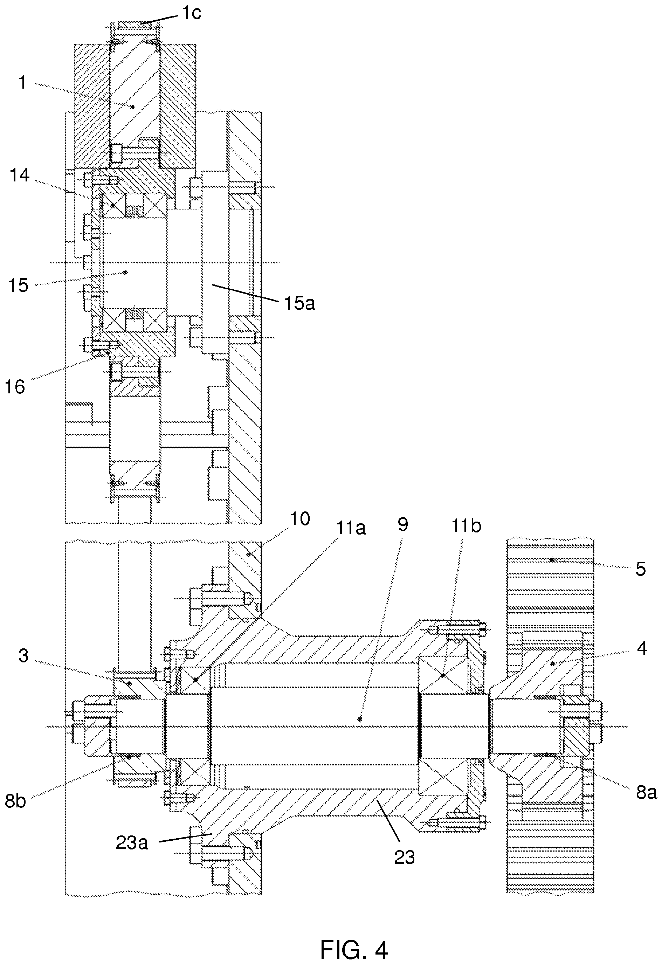

Figure 2 shows an enlarged view of the balancing arrangement of figure 1. More details can be seen in figures 3 and 4. The balancing arrangement comprises a rotating balancing mass 1. The balancing mass 1 is an asymmetric flywheel, which is arranged at the free end of the engine 17. In the embodiment of the figures, the balancing mass 1 is provided with holes 1a for reducing the mass on one side of the balancing mass 1 and with additional weights 1b on the opposite side of the balancing mass 1. The required unbalance depends on the properties of the engine and the other parts of the balancing system. The balancing mass is rotated by a belt 2. The belt 2 is a toothed belt, which is provided with teeth 2a for keeping the balancing mass 1 in the right angular position in relation to the crankshaft 18 of the engine 17. Commercially available industrial timing belts can be used for driving the balancing mass 1. The belt 2 is in direct contact with the outer circumference of the balancing mass 1. Therefore, the outer circumference 1d of the balancing mass 1 is provided with teeth 1c that are engaged with the teeth 2a of the toothed belt 2. Since the balancing mass 1 is driven directly by the belt 2, the arrangement is compact.

For driving the belt 2, the arrangement is provided with a gearwheel 4 that is arranged at a first end of a shaft 9. The gearwheel 4 is rotated by a drive gear 5 that is connected to the crankshaft 18 of the engine 17. Torque is transmitted from the gearwheel 4 to the shaft 9 by means of friction rings 8a. The second end of the shaft 9 is provided with a driving pulley 3. From the shaft 9, the torque is transmitted to the driving pulley 3 via similar friction rings 8b as from the gearwheel 4 to the shaft 9. The shaft 9 is supported by a couple of self-lubricating ball bearings 11a, 11b that are provided with integrated sealings. This helps to increase the service interval of the balancing arrangement. The balancing mass 1 is supported by similar bearings 14 on a shaft 15. The balancing mass 1 is not directly mounted on the bearings 14, but there is a mounting sleeve 16 between the bearings 14 and the balancing mass 1. The mounting sleeve 16 increases the serviceability of the balancing arrangement, since the balancing mass 1 can be easily removed for allowing easy changing of the bearings 14. Also tuning of the system by changing the balancing mass 1 is easier. The shaft 15 of the balancing mass 1 is attached to the frame 10 of the balancing arrangement. The gear ratio of the balancing arrangement is selected so that the rotation speed of the balancing mass 1 equals the rotation speed of the engine. However, because of the gears 4, 5, the rotation direction is opposite. The belt 2 is tensioned by a tensioning device 6. The tensioning device 6 comprises a roller 6a, which pushes the belt 2 against the balancing mass 1 and the driving pulley 3. The tensioning device 6 can be either manually adjusted or automatic.

The balancing arrangement comprises a frame 10, to which other parts of the balancing arrangement can be attached. The frame 10 is a self-supporting plate that enables a modular structure of the balancing arrangement. The arrangement can thus be easily assembled. The shaft 15 of the balancing mass 1 is provided with a flange 15a for attaching the shaft 15 to the frame 10. The shaft 9 of the driving pulley 3 is arranged together with the bearings 11a, 11b inside a casing 23, which is provided with a flange 23a for attaching the casing 23 to the frame 10. The frame 10 is encircled by a collar 10a, which covers the rotating parts of the balancing arrangement and prevents injuries of the engine operators. The collar 10a is provided with one or more openings 10b for ventilation. A cover plate 7 is attached to the collar 10a opposite to the frame 10 of the balancing arrangement. Also the cover plate 7 is provided with one or more openings 7a for ventilation. A suitable material for the cover plate 7 is, for instance, sheet metal.

For monitoring the condition and working of the balancing arrangement, the arrangement is provided with a thermocouple 13 or other means for monitoring the temperature of the bearings 14 of the balancing mass 1. The arrangement is also provided with a speed sensor 12 that monitors the speed of the balancing mass 1 and enables comparison of the engine speed and the rotation speed of the balancing mass 1 to ensure that the toothed belt 2 is working properly.

A balancing arrangement according to the invention is simple and lightweight and can be assembled even to many existing engines with only minor modifications. The need for service of the balancing arrangement is minimal. Because of the elastic belt 2 that is used for driving the balancing mass 1, alternating torques and vibrations are not transmitted to the driving gears and the wear of the gears is negligible. When service of the balancing arrangement is needed, the belt 2 and the bearings can be easily accessed and changed.

It will be appreciated by a person skilled in the art that the invention is not limited to the embodiments described above, but may vary within the scope of the appended claims.

## Claims

1. A balancing arrangement for a piston engine (17), which arrangement comprises a rotatable balancing mass (1), a driving pulley (3), which driving pulley (3) can be arranged in force transmission connection with a crankshaft (18) of the engine (17), a toothed belt (2) for transmitting the rotational movement of the driving pulley (3) to the balancing mass (1), and a belt tensioning device (6), the balancing mass (1) being provided with a toothed circumference (1d) that can be engaged with the toothed belt (2), **characterized in that** for providing a modular structure for the balancing arrangement, the balancing arrangement is provided with a self-supporting frame (10) to which the balancing mass (1) and the shaft (9) of the driving pulley (3) can be attached.

2. An arrangement according to claim 1, **characterized in that** the arrangement is provided with means (12) for monitoring the rotation speed of the balancing mass (1).

3. An arrangement according to claim 1 or 2, **characterized in that** the arrangement is provided with means (13) for monitoring the temperature of the bearings (14) of the balancing mass (1).

4. A piston engine (17) comprising a drive gear (5) that is attached to the free end of a crankshaft (18) of the engine (17), and a gearwheel (4) that is arranged at a first end of a shaft (9) and driven by the drive gear (5), **characterized in that** the engine (17) comprises a balancing arrangement according to claim 1, of which driving pulley (3) is arranged at the second end of the shaft (9).

5. An engine (17) according to claim 4, **characterized in that** the shaft (9) is supported by self-lubricating ball bearings (11a, 11b).

6. An engine (17) according to claim 4 or 5, **characterized in that** the balancing mass (1) is supported by self-lubricating ball bearings (14).

7. An engine (17) according to claim 6, **characterized in that** the engine (17) is provided with means (13) for monitoring the temperature of the bearings (14) of the balancing mass (1).

8. An engine (17) according to any of claims 4-7, **characterized in that** engine (17) is provided with means (12) for monitoring the rotation speed of the balancing mass (1).

## Patentansprüche

1. Ausgleichsanordnung für eine Kolbenkraftmaschine (17), wobei die Anordnung eine drehbare Ausgleichsmasse (1), eine Antriebsscheibe (3), wobei die Antriebsscheibe (3) in Kraftübertragungsverbindung mit einer Kurbelwelle (18) der Kraftmaschine (17) angeordnet werden kann, einen Zahnriemen (2) zum Übertragen der Drehbewegung der Antriebsscheibe (3) zur Ausgleichsmasse (1) und eine Riemenspannvorrichtung (6) umfasst, wobei die Ausgleichsmasse (1) mit einem gezahnten Umfang (1d) versehen ist, der mit dem Zahnriemen (2) eingreifen kann, **dadurch gekennzeichnet, dass** eine modulare Struktur für die Ausgleichsanordnung vorgesehen ist, wobei die Ausgleichsanordnung mit einem selbsttragenden Rahmen (10) versehen ist, an den die Ausgleichsmasse (1) und die Welle (9) der Antriebsscheibe (3) befestigt werden können.

2. Anordnung nach Anspruch 1, **dadurch gekennzeichnet, dass** die Anordnung mit einem Mittel (12) zum Überwachen der Drehzahl der Ausgleichsmasse (1) versehen ist.

3. Anordnung nach Anspruch 1 oder 2, **dadurch gekennzeichnet, dass** die Anordnung mit einem Mittel (13) zum Überwachen der Temperatur der Lager (14) der Ausgleichsmasse (1) versehen ist.

4. Kolbenkraftmaschine (17), umfassend ein Antriebsritzel (5), das an das freie Ende einer Kurbelwelle (18) der Kraftmaschine (17) befestigt ist, und ein Zahnrad (4), das an einem ersten Ende einer Welle (9) angeordnet ist und von dem Antriebsritzel (5) angetrieben wird, **dadurch gekennzeichnet, dass** die Kraftmaschine (17) eine Ausgleichsanordnung nach Anspruch 1 umfasst, dessen Antriebsscheibe (3) an dem zweiten Ende der Welle (9) angeordnet ist.

5. Kraftmaschine (17) nach Anspruch 4, **dadurch gekennzeichnet, dass** die Welle (9) von selbstschmierenden Kugellagern (11a, 11b) getragen wird.

6. Kraftmaschine (17) nach Anspruch 4 oder 5, **dadurch gekennzeichnet, dass** die Ausgleichsmasse (1) von selbstschmierenden Kugellagern (14) getragen wird.

7. Kraftmaschine (17) nach Anspruch 6, **dadurch gekennzeichnet, dass** die Kraftmaschine (17) mit einem Mittel (13) zum Überwachen der Temperatur der Lager (14) der Ausgleichsmasse (1) versehen ist.

8. Kraftmaschine (17) nach einem der Ansprüche 4-7, **dadurch gekennzeichnet, dass** die Kraftmaschine (17) mit einem Mittel (12) zum Überwachen der Drehzahl der Ausgleichsmasse (1) versehen ist.

## Revendications

1. Dispositif d'équilibrage pour un moteur à piston (17), lequel dispositif comprend une masse d'équilibrage rotative (1), une poulie motrice (3), laquelle poulie motrice (3) peut être agencée en liaison de transmission de force avec un vilebrequin (18) du moteur (17), une courroie dentée (2) pour transmettre le mouvement de rotation de la poulie motrice (3) à la masse d'équilibrage (1), et un dispositif de tension de courroie (6), la masse d'équilibrage (1) étant dotée d'une circonférence dentée (1d) qui peut être engagée avec la courroie dentée (2), **caractérisé en ce que** pour fournir une structure modulaire pour le dispositif d'équilibrage, le dispositif d'équilibrage est doté d'un cadre autoporteur (10) auquel la masse d'équilibrage (1) et l'arbre (9) de la poulie motrice (3) peuvent être fixés.

2. Dispositif selon la revendication 1, **caractérisé en ce que** le dispositif est doté d'un moyen (12) pour contrôler la vitesse de rotation de la masse d'équilibrage (1).

3. Dispositif selon la revendication 1 ou 2, **caractérisé en ce que** le dispositif est doté d'un moyen (13) pour contrôler la température des paliers (14) de la masse d'équilibrage (1).

4. Moteur à piston (17) comprenant un engrenage d'entraînement (5) qui est fixé à l'extrémité libre du vilebrequin (18) du moteur (17), et une roue d'engrenage (4) qui est agencée à une première extrémité d'un arbre (9) et entraînée par l'engrenage d'entraînement (5), **caractérisé en ce que** le moteur (17) comprend un dispositif d'équilibrage selon la revendication 1, dont la poulie motrice (3) est agencée à la seconde extrémité de l'arbre (9).

5. Moteur (17) selon la revendication 4, **caractérisé en ce que** l'arbre (9) est supporté par des paliers à billes auto-lubrifiants (11a, 11b).

6. Moteur (17) selon la revendication 4 ou 5, **caractérisé en ce que** la masse d'équilibrage (1) est supportée par des paliers à billes auto-lubrifiants (14).

7. Moteur (17) selon la revendication 6, **caractérisé en ce que** le moteur (17) est doté d'un moyen (13) pour contrôler la température des paliers (14) de la masse d'équilibrage (1).

8. Moteur (17) selon l'une quelconque des revendications 4 - 7, **caractérisé en ce que** le moteur (17) est doté d'un moyen (12) pour surveiller la vitesse de rotation de la masse d'équilibrage (1).
